(19) Europäisches Patentamt
European Patent Office
Office européen des brevets

(11) **EP 3 945 338 B1**

(12) **EUROPÄISCHE PATENTSCHRIFT**

(45) Veröffentlichungstag und Bekanntmachung des Hinweises auf die Patenterteilung:
**18.12.2024  Patentblatt 2024/51**

(21) Anmeldenummer: **21185711.5**

(22) Anmeldetag: **15.07.2021**

(51) Internationale Patentklassifikation (IPC):
*G01S 7/48* (2006.01)        *B60W 50/02* (2012.01)
*B60W 60/00* (2020.01)       *G01S 13/86* (2006.01)
*G01S 13/931* (2020.01)      *G01S 17/86* (2020.01)
*G01S 17/931* (2020.01)      *B60W 50/029* (2012.01)
*G01M 17/007* (2006.01)      *G06V 20/58* (2022.01)

(52) Gemeinsame Patentklassifikation (CPC):
**G01S 17/931; B60W 60/001; G01M 17/007;
G01S 7/4802; G01S 7/4808; G01S 13/865;
G01S 13/867; G01S 13/931; G01S 17/86;
G06V 20/58**

(54) **VORRICHTUNG ZUR UMFELDERKENNUNG EINES AUTOMATISIERT BETREIBBAREN FAHRSYSTEMS**

ENVIRONMENT RECOGNITION DEVICE FOR AN AUTOMATED DRIVING SYSTEM

DISPOSITIF DE DÉTECTION DE L'ENVIRONNEMENT D'UN SYSTÈME DE CONDUITE À FONCTIONNEMENT AUTOMATISÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2020   DE 102020209680**

(43) Veröffentlichungstag der Anmeldung:
**02.02.2022   Patentblatt 2022/05**

(73) Patentinhaber: **ZF Friedrichshafen AG
88046 Friedrichshafen (DE)**

(72) Erfinder:
• **Hinsberger, Arno
88281 Schlier (DE)**
• **Bollmann, Martin
88094 Oberteuringen (DE)**
• **Ruchti, Martin
88048 Friedrichshafen (DE)**
• **Rinkenauer, Stefan
88677 Markdorf (DE)**

(74) Vertreter: **ZF Friedrichshafen AG
Gewerblicher Rechtsschutz
Löwentalerstraße 20
88046 Friedrichshafen (DE)**

(56) Entgegenhaltungen:
**US-A1- 2016 368 491      US-A1- 2018 267 550
US-A1- 2019 113 916      US-A1- 2020 218 913**

• **ROBELL PHILIPP ET AL: "SAFETY FIRST FOR AUTOMATED DRIVING", WHITEPAPERS BAIDU, 1 January 2019 (2019-01-01), pages 1 - 157, XP055844314, Retrieved from the Internet <URL:https://apollo.auto/docment/Safety_First_for_Automated_Driving_handover_to_PR.pdf> [retrieved on 20210923]**

## Beschreibung

Die Erfindung bezieht sich auf eine Vorrichtung zur Umfelderkennung eines automatisiert betreibbaren Fahrsystems.

Derzeit beschäftigt sich die Automobilindustrie intensiv mit der Frage, wie groß der Validierungsaufwand sein muss, um ein automatisiert betreibbares Fahrsystem, auch Automated-Driving-System, abgekürzt AD-System, genannt, abzusichern. Ein Akzeptanzkriterium für ein AD-System ist beispielsweise, dass in $10^9$ Betriebsstunden maximal ein fataler Unfall auftritt. Allerdings ist ein statistischer Nachweis des geforderten Akzeptanzkriteriums auf Gesamtsystemebene schwierig. Andererseits lässt sich die Zuverlässigkeit auf bestimmten Subsystemebenen nur statistisch belegen. Insbesondere sind die Ursachen für nicht-kontinuierliche, auch sporadisch genannt, Fehler in der Umfelderkennung nicht vorhersehbar und darüber hinaus äußerst sensitiv in Bezug auf kleinste Software- und/oder Parameteränderungen. Damit lassen sich keine logischen Szenarien mit eindeutigem Fehlerraum festlegen, aus dem ansatzweise eine Vollständigkeit des Nachweises argumentieren werden könnte. Der Anmelderin ist außerdem kein Standard bekannt, der neben der qualitativen Vorgehensweise auch den jeweils erforderlichen Absicherungsumfang quantitativ beschreibt, das heißt ein standardisierter quantitativer Nachweis des geforderten Akzeptanzkriteriums. Dabei stellt die Quantität die Hauptherausforderung dar. Ferner fehlt aktuell eine Differenzierung des Nachweises der Elektrischen/Elektronischen Robustheit und der Zuverlässigkeit der beabsichtigten Funktion.

Die US 2019/0113916 A1 offenbart Systeme eines autonomen Fahrzeugs und deren Betrieb. Autonome Fahrzeuge können auf Dateneingaben, Prozesse und Ausgabebefehle zurückgreifen. Fehler aufgrund von Übersetzungsfehlern, ausgefallener oder fehlerhafter Ausrüstung, Verbindungen und anderen Komponenten können dazu führen, dass sich ein dynamischer Fahrzeugpfad einer dynamischen Sicherheitszone nähert. In diesem Fall kann eine Warnmeldung von der Bewegungssteuerung gesendet und verarbeitet werden, wenn das Fahrzeug korrekt auf Befehle reagiert oder wenn das Fahrzeug nicht korrekt auf Befehle reagiert. Nähert sich der Weg des Fahrzeugs der sicheren Zone, wird eine Fehlermeldung zur Eindämmung an das entsprechende System gesendet.

Die US 2020/218913 A1 offenbart Techniken zur Bestimmung des Bewegungszustands eines Zielobjekts. In einem Aspekt erkennt ein Bordrechner eines Ego-Fahrzeugs das Zielobjekt in einem oder mehreren Bildern, bestimmt ein oder mehrere erste Attribute des Zielobjekts basierend auf Messungen eines oder mehrerer Bilder, bestimmt ein oder mehrere zweite Attribute des Zielobjekts anhand von Messungen einer Karte einer Fahrbahn, auf der sich das Zielobjekt befindet; und bestimmt den Bewegungszustand des Zielobjekts basierend auf den ein oder mehreren ersten Attributen und den ein oder mehreren zweiten Attributen des Zielobjekts.

Die US 2018/267550 A1 offenbart ein Verfahren zum Betrieb eines gesteuerten Objekts, das in eine sich ändernde Umgebung eingebettet ist, wobei das gesteuerte Objekt und seine Umgebung periodisch mit Hilfe von Sensoren beobachtet werden, und in jeder Periode mindestens drei unabhängige Datenverarbeitungspfade ausgeführt werden basierend auf den Daten erhalten aus der Beobachtung des kontrollierten Objekts und seiner Umgebung.

Die US 2016/368491 A1 offenbart ein Verfahren zum automatisierten Fahrbetrieb eines Kraftfahrzeugs. Es wird eine Standardtrajektorie und eine Sicherheitstrajektorie ermittelt, wobei die Sicherheitstrajektorie ein sicheres Anhalten des Fahrzeugs in einem Notfall in Abhängigkeit von der aktuellen Fahrzeugumgebung realisiert. Die Sicherheitstrajektorie wird einem zweiten Steuergerät zugeführt, von dem Signale an Fahrzeugstellglieder zur Steuerung des Fahrzeugs auf der Basis der Sicherheitstrajektorie im Sicherheitsfall übermittelt werden.

Das Whitepaper "Safety First For Automated Driving", siehe https://apollo.auto/docment/Safety_First for Automated Driving handover to PR.pdf fasst Safety by Design und Verifikations- und Validierungsmethoden (V&V) der SAE L3 und L4 für automatisiertes Fahren zusammen.

Von diesem Stand der Technik ausgehend lag der Erfindung die Aufgabe zugrunde, eine verbesserte Vorrichtung und ein verbessertes Verfahren zur Validierung eines AD-Systems in Bezug den erforderlichen Absicherungsumfang und SOTIF-Risiken anzugeben. Insbesondere war es eine Aufgabe der Erfindung, ein holistisches Verfahren zum Sicherheitsnachweis der beabsichtigten Funktionalität eines L4 AD-Systems bereitzustellen, insbesondere hinsichtlich unvorhersehbaren, sporadischen und bezüglich Software-/Parameteränderungen volatilen Fehlwirkungen.

Die Vorrichtung nach Anspruch 1 löst diese Aufgabe.

Die Erfindung geht davon aus, dass das AD-Gesamtsystem seriell auf die Subsysteme Umfelderkennung, auch See genannt, Trajektorienplanung, auch Think genannt, und Fahraktion, auch Act genannt, dekomponiert und damit validiert werden kann. Bei einer Fehlerrate von $10^{-9}$ h auf Gesamtsystemebene ergibt sich so eine Fehlerrate von $3,33 \times 10^{-10}$ h für jedes Subsystem unter der Bedingung, dass ein einzelner gravierender Fehler eines der Subsysteme zu einem katastrophalen Fehler des AD-Gesamtsystems führt. Die Umfelderkennung umfasst Umfelderfassungssensoren. Die Umfelderkennung kann auch eine oder mehrere Domain-ECUs umfassen, auf denen die Verarbeitung von Sensor-Rohdaten erfolgt. Im Rahmen der Erfindung ist es prinzipiell möglich, dass die Verarbeitung der Sensor-Rohdaten auch direkt auf Hardware der Umfelderfassungssensoren erfolgt. Die Trajektorienplanung umfasst eine AD-Domain ECU, die aus Signalen der Umfelderfassungssensoren Umfeldmodelle berechnet und Regelungs- und/oder Steuerungssignale bestimmt, um einer bestimmten Trajektorie zu folgen. Das Subsystem Fahraktion umfasst Aktuatoren für Längs- und/oder Querführung, Fahrwerkskomponenten und Antriebskomponenten.

Die Erfindung stellt eine Vorrichtung zur Umfelderkennung eines automatisiert betreibbaren Fahrsystems gemäß Anspruch 1 bereit.

Die Vorrichtung umfassen Hardware- und Softwarekomponenten.

In einem nicht beanspruchten Verfahren zur Validierung eines automatisiert betreibbaren Fahrsystems wird ein Gesamtsystem des Fahrsystems umfassend die Subsysteme Umfelderkennung, wobei das Subsystem der Umfelderkennung mehrere Umfelderfassungssensoren umfasst, Trajektorienplanung und Fahraktion auf die Subsysteme dekomponiert und validiert. In einem weiteren Verfahrensschritt wird das Subsystem der Umfelderkennung durch eine erfindungsgemäße Vorrichtung in einzelne, zu den jeweiligen Umfelderfassungssensoren gehörende Verarbeitungskanäle dekomponiert. In einem weiteren Verfahrensschritt wird das Subsystem der Umfelderkennung basierend auf der Dekomposition in die einzelnen Verarbeitungskanäle gegen Objekte auf Basis zuvor aufgezeichneter Rohdaten validiert. Gegen Rohdaten validieren bezeichnet den Nachweis der erforderlichen Robustheit der einzelnen Verarbeitungskanäle mittels Reprozessierung zuvor aufgezeichneter Rohdaten in statistisch signifikantem Umfang.

Damit kann die vorliegende Offenbarung ein holistisches Verfahren zum Sicherheitsnachweis der beabsichtigten Funktionalität eines L4 AD-Systems bereitstellen.

Vorteilhafte Ausgestaltungen der Erfindung ergeben sich aus der Zeichnung und der Beschreibung bevorzugter Ausführungsbeispiele. Automatisiert betreibbare Fahrsysteme führen die dynamische Fahraktion automatisiert aus. Die Fahraktion umfasst Fahrfunktionen für Längs- und/oder Querführung, beispielsweise Beschleunigung wie etwa Bremsen oder Lenkung, und Fahrfunktionen zur Kommunikation mit Umfeld, beispielsweise Betätigung einer Lichtanlage wie etwa Scheinwerfer oder Blinker oder Betätigung von Schallerzeugungseinrichtungen, beispielsweise einer Hupe. Automatisiert betreibbare Fahrsysteme umfassen Hardwarekomponenten, beispielsweise Umfelderfassungssensoren, Steuergeräte, Aktuatoren, Antriebs- und Fahrwerkskomponenten, und Softwarekomponenten, beispielsweise Software zum Auswerten von Rohdaten der Umfelderfassungssensoren, zum Bestimmen von Umfeldmodellen oder zum Planen einer Trajektorie oder Mission. Die Norm SAE J3016 beschreibt die Klassifizierung und Definition von Begriffen für straßengebundene Kraftfahrzeuge mit Fahrzeugsystemen zum autonomen Fahren. Ein Automatisierungslevel der automatisiert betreibbaren Fahrsysteme bestimmt beispielsweise die Norm SAE J3016. Die Erfindung betrifft insbesondere SAE J3016 Level 4 AD-Systeme mit entsprechend definierter Betriebsfunktionen, auch Operational Design Domain, abgekürzt ODD, genannt, definierter Überwachung des Fahrumfeldes, auch Object and Event Detection and Response, abgekürzt OEDR, genannt, definierter Trajektorienplanung, auch maneuver behavior genannt, und definierten Systemfehlern, auch failure mode behaviors genannt. Das AD-System wird derart ausgelegt, dass es für diese ODDs, OEDRs, maneuver behavior und failure mode behaviors funktioniert. In einem Ausführungsbeispiel der Erfindung ist das AD-System eine Buslinie mit fester Route und Spurzuordnung, die von einem Bus, beispielsweise einem People Mover, im SAE J3016 Level 4 Betrieb befahren werden soll.

Ein Signalverarbeitungspfad umfasst Signalleitungen und Signalauswertung. Die erfindungsgemäßen Signalverarbeitungspfade umfassen Hardware- und/oder Softwarekanäle, zum Beispiel Sensorkanäle.

Der erste Signalverarbeitungspfad, auch Performance Pfad genannt, der Vorrichtung regelt eine möglichst weit vorausschauende Regelung im Komfortbereich, zum Beispiel Bestimmung von Beschleunigungen, umfassend auch Verzögerungen, von 1.5m/s$^2$, auf Basis auch nur teil- und zeitweise über die Sensorik erfassbarer Informationen und hochperformanter und/oder wissensbasierter Algorithmen, zum Beispiel Erkennung einer Fußgängerabsicht zur Querung der Straße. Um die hohe funktionale Performance zu erreichen, werden die Umfelderfassungssensoren in dem ersten Signalverarbeitungpfad weit außerhalb ihres sicheren Erfassungsbereiches und jenseits des Sicherheitsbereichs betrieben. Das führt zu statistischer und Szenen systematischer Fluktuation von Messpunkten und damit zu Fehlern in der Umgebungserfassung. Ebenfalls machen gelernte Algorithmen, insbesondere aus dem Bereich des maschinellen Lernens, unter diesen Bedingungen Interpretationsfehler. Das Verhalten der Auswertealgorithmik ist nicht zwingend eindeutig vorhersagbar. Das bedeutet, dass eine sichere Regelung nicht gewährleistet werden kann und der Performancepfad entsprechen falsche Trajektorienvorgaben machen kann. Die Erfindung stellt zunächst keine Anforderungen an die Software-Architektur des Performance-Pfades. In Bezug auf künstliche Intelligenz, umfassend trainierbare oder trainierte künstliche neuronale Netzwerke zur Objekterkennung, semantische Bildsegmentierung oder Perzeption, beispielsweise konvolutionale oder rekurrente Netzwerke oder Netzwerke umfassend Long-Short-Term-Memories zur Erstellung zeitlicher Zusammenhänge, beispielsweise Tracking, Fusion und/oder funktionelle Abhängigkeit ist die Software-Architektur des Performance-Pfades frei wählbar. Im Rahmen der Erfindung liegt der Einsatz von künstlicher Intelligenz innerhalb der einzelnen Verarbeitungskanäle des Safety Pfades, sofern die grundsätzlichen Anforderungen an die Architektur des Safety-Pfades eingehalten werden und zutreffende Alternativlösungen für konventionelle SWE4/SWE5-Testaktivitäten gefunden werden.

Der zweite Signalverarbeitungspfad, auch Safety Pfad genannt, der Vorrichtung, das ist der erfindungsgemäße Signalverarbeitungspfad, wertet die Sensorik für jede erforderliche Messaufgabe immer nur in einem sicheren Erfassungsbereich, das ist die Sicherheitszone, aus. Der sichere Erfassungsbereich, auch Safety Zone genannt, ist der Bereich unmittelbar um ein Fahrzeug, in dem es um die Vermeidung von Unfällen unter Ausschöpfung voller Verzögerungs- und/oder Ausweichpotentiale des Fahrzeuges geht. In dieser Safety Zone muss das AD System die maximale Zuverlässigkeit gewährleisten. Die Safety Zone wird unter anderem in Abhängigkeit der ODD-Streckenabschnitte, der Geschwindigkeit des Fahrzeuges und/oder belegter Reaktions- und Verzögerungswerte anderer Verkehrsteilnehmer definiert. Die Auswertung erfolgt mit nachvollziehbaren Algorithmen, wobei die Verarbeitungskanäle unabhängig voneinander ihre Rohdaten verarbeiten und bewertbare Objekte ausgeben. Die bewertbaren Objekte werden dann logisch kombiniert zu einer Entscheidung im Sinne von erkannt/nicht erkannt. Der zweite Signalverarbeitungspfad ist eine Rückfallebene des ersten Signalverarbeitungspfades. Der zweite Signalverarbeitungspfad überprüft die Umfelderkennung und/oder Trajektorienplanung des ersten Signalverarbeitungspfades und korrigiert diese gegebenenfalls durch ein unkomfortables, zum Beispiel

8m/s$^2$ maximaldynamisches, Manöver, um zu verhindern, dass aus einem Fehler im ersten Signalverarbeitungspfad ein kritischer Fehler wird. Der Safety Pfad stellt damit eine Rückfallebene des Performance Pfades dar. Das maximaldynamische Manöver ist ein Beispiel für eine sichere Trajektorie. Damit wird in dem zweiten Signalverarbeitungspfad eine sichere Trajektorie bestimmt. Ein weiteres Beispiel für eine sichere Trajektorie ist ein Nothaltemanöver.

Durch die einzelnen, Sensor spezifischen Verarbeitungskanäle des erfindungsgemäßen Signalverarbeitungspfades, das heißt des Safety-Pfades, werden die Rohdaten nämlich unabhängig voneinander, das heißt insbesondere ohne Feedbackschleifen oder Fusion, verarbeitet, um aus den jeweiligen Rohdaten Umfeldmodelle zu bestimmen. Durch die Sensor spezifischen und damit unabhängigen Verarbeitungskanäle, die Sensor spezifische Softwarekanäle umfassen, erreicht die Erfindung eine weitgehende funktionale Redundanz auf dem Safety-Pfad. Die erkannten Objekte, umfassend Fahrspuren, Freiräume, Fahrzeuge, Personen, Elemente der Infrastruktur und/oder der Vegetation und andere Umweltartefakte, werden durch Anwenden expliziter logischer Verknüpfungen der einzelnen Verarbeitungskanäle zusammengeführt.

Unabhängig von der funktionalen Redundanz unterliegen auch die einzelnen Verarbeitungskanäle des Safety-Pfads sporadischen, das heißt nicht-kontinuierlichen, und unvorhersehbaren, hinsichtlich Softwareversion volatilen, Erkennungsfehlern. Um eine Robustheit gegen diese Fehler nachzuweisen, kann ein Dauerlauf durchgeführt werden.

Die Architektur für normale Fahrsituationen, das heißt für den Performance-Pfad, ist ausgelegt, keine Einschränkungen zu machen, um eine möglichst gute Performanz zu erreichen. Erfindungsgemäß werden die Sicherheitsanforderungen auf den Safety-Pfad abgeladen. In diesem Zusammenhang wird der Performance-Pfad Doer und der Safety-Pfad Checker genannt.

Die Redundanz wird hinsichtlich der Funktion (Software/SOTIF) durch die unabhängigen Verarbeitungskanäle vollständig auf dem zweiten Verarbeitungspfad erreicht und hinsichtlich eines Hardwareausfalls durch die Kopie der sicheren Trajektorie auf die Hardware des ersten Verarbeitungspfads oder eine andere unabhängige Hardware-Einheit erreicht. Im Rahmen der Erfindung wird neben der Umfelderkennung auch die Trajektorienplanung und die Fahraktion in dem ersten und zweiten Signalverarbeitungspfad durchgeführt, das heißt die Vorrichtung umfasst einen ersten und einen zweiten Signalverarbeitungspfad für das AD-Gesamtsystem.

Umfelderfassungssensoren erfassen das Umfeld des AD-Systems und beruhen auf unterschiedlichen Sensortechnologien, beispielsweise Optik wie etwa Kamerasensoren oder Lidarsensoren, Radar oder Akustik wie etwa Mikrofone. Umfelderfassungssensoren des AD-Systems umfassen im Rahmen der Erfindung auch Beschleunigungssensoren. Die Umfelderfassungssensoren sind jeweils mit dem ersten Pfad und dem zweiten Pfad Signal übertragend verbunden.

Das erste und zweite Steuergerät ist beispielsweise jeweils eine AD Domain ECU zur Steuerung eines automatisierten Fahrbetriebs, beispielsweise eines fahrerlosen, vollautomatisierten Fahrbetriebs. ECU bedeutet Electronic Control Unit, das heißt elektronisches Steuergerät. Domain bedeutet Domäne. Domänen im Fahrzeug sind beispielsweise Antriebsstrang, Fahrwerk, Karosserie oder Multi-Media. Viele Funktionen wirken innerhalb einer Domäne, aber auch Domänengrenzen hinweg miteinander in einem Funktionsnetz zusammen. Die Steuergeräte umfassen beispielsweise Mikrocontroller, ASICs, FGPAs oder einen Prozessor, beispielsweise einen Mehrkernprozessor, und Speichermodule. Der Prozessor ist für einen Signal-/Datenaustausch mit Speichermodulen konfiguriert. Beispielsweise umfasst der Prozessor ein Bussystem. Die Speichermodule bilden den Arbeitsspeicher. Die Speichermodule sind beispielsweise RAM, DRAM SDRAM oder SRAM. Bei einem Mehrkernprozessor sind mehrere Kerne auf einem einzigen Chip, das heißt einem Halbleiterbauelement, angeordnet sind. Mehrkernprozessoren erreichen eine höhere Rechenleistung und sind kostengünstiger in einem Chip zu implementieren im Vergleich zu Mehrprozessorsystemen, bei denen jeder einzelne Kern in einem Prozessorsockel angeordnet ist und die einzelnen Prozessorsockel auf einer Hauptplatine angeordnet sind.

Für den erfindungsgemäßen Safety-Pfad bedeutet Umfeldmodelle in den jeweiligen Sensorkanälen zu bestimmen, dass für jeden der Sensoren des AD-Systems die Sensorrohdaten, beispielsweise pixelweise Helligkeitswerte eines Kamerasensors, unabhängig von anderen Sensorrohdaten in den Steuergeräten derart verarbeitet werden, dass jeweils das Umfeldmodell derart beschrieben wird, dass es für einen Menschen eindeutig bewertet werden kann, insbesondere hinsichtlich einer Kritikalität für die Wirkkette. Sensorkanal, das ist ein Verarbeitungskanal, bezeichnet die Detektions- oder Erkennungswirkkette. Beispielsweise werden in dem jeweiligen Umfeldmodell Objekte, Freiraum und/oder Fahrspuren bestimmt. Die Anforderung, dass jeweils das Umfeldmodell derart beschrieben wird, dass es für einen Menschen eindeutig bewertet werden kann, gilt für den Performance-Pfad zunächst nicht.

Durch die unabhängige Auswertung sind die Sensorkanäle funktional weitgehend redundant, obwohl sie auf der gleichen Hardware, nämlich auf dem Safety-Pfad, beispielsweise auf dem Steuergerät des Safety-Pfades, gerechnet werden. Die Dekomposition der funktionalen Fehlerraten, das sind die SOTIF-Fehler, erfolgt erfindungsgemäß auf dem Safety-Pfad auf die einzelnen Sensorkanäle. Dadurch ist der Performance-Pfad völlig frei hinsichtlich Rohdatenverarbeitung. Damit ist insbesondere eine Robustheit gegen nicht kontinuierliche Fehler in den einzelnen Sensorkanälen nachweisbar. Damit wird die geforderte Zuverlässigkeit, beispielsweise 10$^{-9}$h, was einem "SOTIF-Level-D" entsprechen würde, auf die einzelnen Sensorkanäle dekomponiert, wie im Folgenden genauer beschrieben wird. Ein SOTIF-Level-D wäre ein Analogon zum ASIL-Level, um eine Differenzierung zwischen E/E- und Software-Fehlern und damit auch differenzierte Sicherheitskonzepte zu erreichen.

Gegenüber dem bekannten Stand der Technik leistet die Erfindung damit eine Unterscheidung eines SOTIF-Levels in Bezug auf die Abgrenzung zu ASIL-Levels. Bislang wurde im bekannten Stand der Technik nicht zwischen Hardware-Redundanz und Software-Redundanz unterschieden. Die erfindungsgemäß vorgeschlagene Architektur unterscheidet zwischen SOTIF und E/E. Von dieser Unterscheidung geht die erfindungsgemäß vorgeschlagene Teststrategie aus.

Durch das Erzeugen einer Kopie der Regelungs- und/oder Steuerungssignale stellt die Erfindung zusätzlich zu einem Sicherheitsziel bezüglich SOTIF-Fehlern gleichzeitig auch ein Sicherheitsziel bezüglich der elektrischen/elektronischen, das heißt E/E, Ausfallsicherheit gemäß ISO 2626-2 sicher. Nach einem Aspekt der Erfindung werden die Regelungs- und/oder Steuerungssignale kontinuierlich, beispielsweise je Messzyklus, kopiert. Das heißt, dass bei einem Hardwareausfall des Steuergeräts eine Kopie der Regelungs- und/oder Steuerungssignale für eine aktuell berechnete sichere Trajektorie existiert, auf die zugegriffen werden kann, beispielsweise von einem Performance-Pfad aus.

Erfindungsgemäß ist das Steuergerät ausgeführt, die Regelungs- und/oder Steuerungssignale in eine relativ zu dem Signalverarbeitungspfad externe Verarbeitungseinheit zu kopieren, insbesondere in eine E/E-unabhängige externe Verarbeitungseinheit. Damit kann die externe Verarbeitungseinheit die Regelungs- und/oder Steuerungssignale ausführen, falls die Hardware des Steuergeräts ausfällt. Beispielsweise umfasst das Steuergerät eine drahtgebundene oder drahtlose Schnittstelle zu der externen Verarbeitungseinheit. Beispielsweise sind die Regelungs- und/oder Steuerungssignale in einem Speicher des Steuergeräts kopiert und werden über die Schnittstelle kontinuierlich in einen Speicher der externen Verarbeitungseinheit übertragen. Die externe Verarbeitungseinheit ist das Steuergerät des Performance-Pfades.

SOTIF-Fehler, beispielsweise sporadische Erkennungsfehler, haben mit Hardware-Fehlern nichts zu tun. Die Hardware und Basisdienste funktionieren fehlerlos und dennoch treten aufgrund von Falschinterpretierungen von Messmehrdeutigkeiten, Modell- und/oder Assoziationsfehlern in der Auswertungssoftware gravierende Fehler auf. Hardware-Fehler haben umgekehrt nichts mit der Softwarefunktion zu tun. Maßgeblich ist, dass Komponenten aufgrund elektrischer/elektronischer Fehlfunktionen oder schädlicher äußerer Einwirkungen ausfallen. Durch die Erfindung wird eine Robustheit gegen SOTIF-Fehler erreicht und gleichzeitig das Sicherheitsziel hinsichtlich E/E-Fehler sichergestellt.

Beispielsweise wird die in dem Safety-Pfad gerechnete sichere Trajektorie auf das Steuergerät des Performance-Pfads kopiert. Diese Maßnahme führt dazu, dass bezüglich der sicheren Trajektorie eine hardwarebezogene Redundanz erreicht wird. Fällt nun eines der beiden Steuergeräte aus, nutzt man die auf dem anderen Steuergerät vorhandene sichere Trajektorie, um beispielsweise ein Nothaltemanöver umzusetzen. Damit wird eine E/E bezogene ASIL-D Anforderung an das AD-Gesamtsystem auf jeweils eine ASIL-B Anforderung für zwei redundante Steuergeräte, nämlich das erste und das zweite Steuergerät, dekomponiert, nämlich auf die Hardware, die der erste Pfad beinhaltet oder eine andere unabhängige Hardware, auf die die sichere Trajektorie kopiert wurde, und eine Hardware, die den zweiten Pfad beinhaltet, obwohl die Anforderung bezüglich SOTIF-Robustheit ausschließlich an der Auswertungssoftware hängt, die auf dem zweiten Steuergerät in dem zweiten Pfad ausgeführt wird ("SOTIF-D").

Erfindungsgemäß umfasst der Safety-Pfad Programmbefehle, die bewirken, dass das Steuergerät die von den einzelnen Verarbeitungskanälen erkannten Objekte in einer ODER-Entscheidung, Mehrheitsentscheidung oder N-aus-X-Entscheidung, wobei X die Anzahl der Umfelderfassungssensoren und N eine vorgegebene Zahl mit N ≤ X ist, zusammenführt, wenn das Programm auf dem Steuergerät läuft. Diese Entscheidungen sind lediglich Beispiele für eine erfindungsgemäß vorgeschlagene logische Operation.

Beispielsweise beruht der Safety-Pfad, und auch der Performance-Pfad, auf drei unterschiedlichen Sensortechnologien, beispielsweise Radar-, Kamera- und Lidartechnologie. Beispielsweise ist X=3 und N=2. Das heißt, die logische Operation ist eine 2/3-Mehrheitsentscheidung, was einer Majoritätsredundanz von 2 aus 3 entspricht. Ein 2/3 Entscheider ist ein regelbasierter Entscheider, der ein Objekt immer dann als existent bewertet, wenn zwei der drei Sensorkanäle das Objekt bestätigen. Ein derartiges Votum hat den Vorteil, dass es gleich sensitiv auf Falsch-Positiv- und Falsch-Negativ-Erkennungen reagiert. Durch die 2 aus 3 Redundanz ergibt sich dann auf Ebene eines Sensorkanals die Fehlerrate von $10^{-5}$ h. Zur Validierung dieser Fehlerrate sind 284.600 Betriebsstunden zum Nachweis des Ausbleibens katastrophaler Fehler notwendig, was $14.2 \times 10^6$ Testkilometer entspricht, unter der Annahme, dass sich ein Versuchsfahrzeug im Schnitt mit einer Geschwindigkeit von 50km/h fortbewegt. ohne katastrophalen Fehler nachgewiesen werden. Ohne die erfindungsgemäße Dekomposition der Umfelderkennung auf drei redundante Sensorkanäle mit regelbasiertem Entscheider müsste für jedes der Subsysteme $450.0 \times 10^9$ Testkilometer gefahren werden ohne Eintreten eines katastrophalen Fehlers.

Ein weiteres Beispiel ist X=3 und N=1. Das ist ein 1/3-Entscheider, der ein Objekt immer dann als existent bewertet, wenn einer der drei Sensoren das Objekt erkennt. Der 1/3-Entscheider ist von Vorteil, um eine Falsch-Negativ-Erkennungsrate zu minimieren. In einer Szene erkennt beispielsweise der Radar ein Objekt. Die Kamera und der Lidar erkennen kein Objekt. Eine Fusion der Kamera-, Lidar- und Radar-Daten in dem 2/3-Entscheider würde kein Objekt ausgeben. Damit könnte aber ein Falsch-Negativ entstehen, falls das Objekt tatsächlich existiert. Durch den 1/3-Entscheider wird aber ein Objekt ausgegeben, sobald dieses auch nur von einem Umfelderfassungssensor erkannt wurde.

Ein weiterer Aspekt der Erfindung betrifft einen 1/3-Entscheider in einer ersten Erkennungsstufe und einen Falsch-Positiv-Filter in einer zweiten Erkennungsstufe. Der Falsch-Positiv-Filter führt einen deterministischen Algorithmus aus, um die bei dem 1/3-Entscheider in Kauf genommenen Falsch-Positiv-Erkennungen herauszufiltern. Der Falsch-Positiv-Filter wird auch Hypothesis Falsifier genannt. Diese Architektur hat den Vorteil, dass im Vergleich zu dem 2/3-Entscheider die Validierungsziele um eine Größenordnung geringer sind. Beispielsweise sind mit einem 1/3-Entscheider in dem zweiten Pfad 272.700 Testkilometer ohne Eintreten eines katastrophalen Fehlers nachzuweisen (funktionale Korrelation vereinfachend vernachlässigt).

Es liegt auch im Rahmen der Erfindung, dass Rohdaten von X Umfelderfassungssensoren derselben Sensortechnologie ausgewertet werden, beispielsweise 3, 5 oder mehr Radarsensoren, Kamerasensoren oder Lidarsensoren. Allerdings hat der Einsatz von unterschiedlichen Sensortechnologien den Vorteil, dass auch eine funktionale Korrelation geringer ist als bei Sensoren derselben Sensortechnologie aufgrund unterschiedlichem Messprinzip.

Nach einem weiteren Aspekt der Erfindung ist das Steuergerät ausgeführt ist, die erkannten Objekte durch Ausführen logischer Operationen über Verarbeitungszyklen zusammenzuführen. Die Objekte werden über mehrere Verarbeitungszyklen hinweg, insbesondere über eine festgelegte Anzahl von Verarbeitungszyklen, oder pro Verarbeitungszyklus zusammengeführt. Dies erhöht die Robustheit des Systems (v.a. im Zusammenhang mit Falscherkennungen).

In einer weiteren Ausgestaltung umfasst der Safety-Pfad zu jedem der Umfelderfassungssensoren einen ersten Verarbeitungskanal und einen zweiten Verarbeitungskanal. Das Steuergerät ist ausgeführt, in den einzelnen ersten Verarbeitungskanälen statische Objekte zu erkennen und zusammenzuführen, in den einzelnen zweiten Verarbeitungskanälen dynamische Objekte zu erkennen und zusammenzuführen und in Abhängigkeit dieser Zusammenführungen die Regelungs- und/oder Steuerungssignale zu bestimmen.

Statische Objekte beschreiben das statische Umfeld und sind Teil der ODD/OEDER Beschreibung. Beispielsweise sind statische Hindernisse, wie zum Beispiel Leitplanken, Bordsteine, Häuser oder Spurinformationen, statische Objekte.

Dynamische Objekte umfassen beispielsweise Fußgänger, Fahrradfahrer und/oder Fahrzeuge. Dynamische Objekte lösen sporadische Detektionsfehler und/oder kontinuierliche Ablagefehler aus.

Durch zugrundeliegende physikalische Prinzipien treten kontinuierliche Fehlerbilder in solcher Form auf, dass die Auftretenswahrscheinlichkeit der Auftretenshäufigkeiten einer kontinuierlichen Verteilungsfunktion folgt. Zum Beispiel unterliegt die Positionsmessung von Objekten einer Abweichung gemäß kontinuierlichen Verteilung; z.B. der Gaußschen Normalverteilung. Nichtkontinuierliche Fehler, auch sporadische Fehler genannt, liegen in Abweichungsbereichen jenseits der Standardabweichung.

Nicht-kontinuierliche Fehler umfassen Falsch-Positiv-Erkennungen, beispielsweise wird ein real existierendes Objekt an einer falschen Position verortet. In diesem Kontext spricht man auch von einem sporadischen Ablagefehler. Ein weiteres Beispiel ist eine Geistererkennung, das heißt ein real nicht vorhandenes Objekt wird von der Umfelderkennung erkannt. Nicht- kontinuierliche Fehler umfassen ferner Falsch-Negativ-Erkennungen, das heißt ein real vorhandenes Objekt wird von der Umfelderkennung nicht detektiert.

Nicht-kontinuierliche Fehler sind seltener zu beobachten als kontinuierliche. Fehler, die mit allgemeinen sensorischen Fehlern einhergehen, stehen im Zusammenhang mit Abstand, Auflösung, Rauschen. Diese Fehler können in jedem Verarbeitungszyklus beobachtet werden, weil der Sensor praktisch nie 100% exakt misst, und sind deswegen kontinuierliche Fehler. Dagegen treten die sporadischen Fehler mit zunehmender Entwicklungsreife immer seltener auf, was sie nicht weniger von Bedeutung macht, sondern bloß noch unkalkulierbarer. Durch die erfindungsgemäße Betrachtung der Erkennnungsleistung über einen langen Dauerlauf wird eine Aussage über sporadische Fehler erzeugt.

Für kontinuierliche Fehler ist vergleichsweise schnell eine Verteilung der Fehleramplitude mit gutem Konfidenzintervall ausmessbar. Das geht mit vergleichbar geringem Aufwand und deswegen kann man dabei z.B. auf DGPS Referenzsysteme, das sind Referenzsysteme mit differentiellem GPS, zurückgreifen, bei denen man auch die Zielobjekte ausrüsten muss. Zur Messung kontinuierlicher Fehler wird in der Regel eine hochgenaue Referenz, beispielsweise im Zentimeterbereich, verwendet, um statistisch aussagekräftige Aussagen zu generieren. Typischerweise benötigen derartige Messsysteme, zum Beispiel DGPS, Messeinrichtungen in jedem Objekt, das untersucht wird, beispielsweise ein Hunter-Target Setup. In dem Fall von sporadischen Fehlern kann nicht jedes Zielobjekt, das im Dauerlauf angetroffen wird, mit DGPS ausgerüstet werden. Das heißt, es ist nur ein Referenzsystem verfügbar, das auf dem Dauerlauffahrzeug verbaut ist. Das ist naturgemäß ungenauer, was aber auch nicht von Bedeutung ist, denn die sporadischen Fehlwirkungen verursachen viel größere Abweichungen als jene, die durch die kontinuierlichen sensorischen Fehler entstehen. Man kann auch alternative Methoden einsetzen, z.B. Drohnen, die die relative Bewegung der Umfeldobjekte bildbasiert auswerten. Man kann sich den Aufwand eben deswegen leisten, weil die Verteilungen vergleichsweise schnell gelernt wurden.

Die Erfindung ermöglicht es, kontinuierliche und nicht-kontinuierliche Fehler zu unterscheiden. Erfindungsgemäß grenzt sich ein nicht-kontinuierlicher Fehler über eine sprunghafte und im Vergleich zu den kontinuierlichen Fehlern sehr große Abweichung von der Referenz ab. Nach einem Aspekt der Erfindung werden nicht-kontinuierliche Fehler durch ein Genauigkeitslimit der Referenz, beispielsweise 3 Sigma Abweichung, von den kontinuierlichen Fehlern abgegrenzt.

Akzeptanzkriterien beziehen sich auf die apriori unbekannten Fehlermodi, und zwar zunächst grundsätzlich auf AD-Gesamtsystemebene. Die erfindungsgemäß vorgeschlagene funktionelle Architektur der Vorrichtung umfassend die serielle Dekomposition des Gesamtsystems auf die Subsysteme Umfelderkennung, Trajektorienplanung und Fahraktion und die Dekomposition in einzelne Sensorkanäle der Umfelderkennung ermöglicht den Nachweis der Robustheit des AD-Systems gegen Fehler, deren Parameterraum man zunächst noch gar nicht kennt.

Zum Nachweis einer Erkennungsrobustheit im Realverkehr können Rohdaten in einem ersten Dauerlauf eingefahren und Erkennungsleistungen einzelner Verarbeitungskanäle über eine Reprozessierung der Rohdaten in Entwicklungsstadien und/oder Aktualisierungen einer Software des Subsystems der Umfelderkennung SEE bestimmt werden, insbesondere bei jedem größeren Software-Release.

Die Auslösebedingungen, auch Triggerbedingungen genannt, für Erkennungsfehler im Realverkehr, insbesondere für nicht-kontinuierliche Fehler, sind aufgrund von Messmehrdeutigkeiten und/oder unzureichenden Objektmodellen apriori nicht bekannt oder vorhersehbar und volatil in Bezug auf selbst geringste Softwareanpassungen. Die Robustheit kann über die kontinuierliche Reprozessierung einer quantitativ und qualitativ signifikanten Datenmenge nachgewiesen werden. Die erforderliche Datenmenge ergibt sich direkt aus dem für das AD-Gesamtsystem gefordertem Akzeptanzkriterium (ähnlich Sicherheitsziel) und dessen Dekomposition auf die für die einzelnen Sensorkanäle geforderte Robustheit. Mittels der logischen Operationen wird die Dekomposition des Akzeptanzkriteriums für das Gesamtsystem auf Validierungsziele für die einzelnen Sensorkanäle mathematisch möglich und dadurch der Absicherungsumfang praktisch handhabbar.

Wie beschrieben, sind die Triggerbedingungen für Erkennungsfehler im Realverkehr aufgrund von Messmehrdeutigkeiten in Verbindung mit unzureichenden Objektmodellen apriori nicht vorhersehbar. Ferner sind die Triggerbedingungen volatil in Bezug auf selbst geringste Softwareanpassungen. Diese Unvorhersehbarkeit und Volatilität erfordert einen Test mit kontinuierlichem Stimulus in statistischen Umfang und damit eine dauerlaufgestützte Bewertung der Robustheit der Umfelderkennung. Ausgehend hiervon können Rohdaten einzelner Sensoren in einem ersten Dauerlauf, beispielsweise mit mehreren Dauerlauffahrzeugen, eingefahren werden. Dies stellt einen sogenannten Open- Loop Prozess dar. Beispielsweise werden die Rohdaten für jedes Softwarerelease reprozessiert. Dadurch wird die Robustheit der Umfelderkennung und/oder der einzelnen Sensorkanälen gegen Falscherkennungen quantitativ nachgewiesen. Trotz der Volatilität ist damit die Robustheit des Systems gegen die sporadischen Fehler, die auf unbekannten und volatile Triggerbedingungen basieren, auch nach einer Änderung der Software und/oder anderer Parameter bestätigbar.

Zum Nachweis der Erkennungsfähigkeit können die Umfelderfassungssensoren unter Berücksichtigung einer realen Einbauposition in dem Fahrsystem auf einem schienengestüzten Versuchsträger angeordnet sein. Versuchsfahrten für einzelne Szenarien werden wiederholt. Damit ist zunächst nachweisbar, dass das System grundsätzlich alle relevanten Objekte im Sicherheitsbereich zuverlässig erkennt.

Grundlage für alle weiteren Testaktivitäten ist der Nachweis, dass alle relevanten Objektklassen und auch statische Hindernisse unter allen ODD/OEDER spezifischen Randbedingungen im Sicherheitsbereich grundsätzlich erkannt werden. Bei einem AD-System stellt die Erkennung leichtverletzlicher Verkehrsteilnehmer das Hauptsicherheitsziel dar. Im ADAS Fall dagegen wird der Fahrer bloß unterstützt bei seiner Fahraktion und es gibt keine Garantie, dass ein leichtverletzlicher Verkehrsteilnehmer unter allen relevanten Umständen auch tatsächlich erkannt wird. Beispielsweise ist für ein Notbremssystem die Erkennungsleistung kein Sicherheitsziel. Der Nachweis einer grundsätzlichen Erkennung auf wenige Dummies unter klinischen Laborbedingungen wie im ADAS Fall reicht für AD-Systeme nicht aus. Da leichtverletzliche Verkehrsteilnehmer in möglichst allen Posen und Umwelteinflüssen nachzuweisen sind, reichen einzelne und von den Bewegungsmöglichkeiten her stark limitierte Dummies für realitätsnahe Tests nicht aus. In der Validierung ist mit realen Menschen unter realen und möglichst reproduzierbaren Umwelteinflüssen zu testen. Die Erfindung schlägt vor, das Sensorset unter Berücksichtigung einer realen Einbauposition auf einen schienengestützen Versuchsträger zu verbauen. Damit wird über mechanische Maßnahmen als Rückfallebene sichergestellt, dass die Apparatur nicht tatsächlich mit menschlichen Versuchsteilnehmern, beispielsweise in einer Crash-Halle, kollidiert. Der schienengestüzte Versuchsträger ermöglicht damit, dass sich menschliche Versuchsteilnehmer im sicherheitskritischen Bereich der AD-Umfelderkennung aufhalten können, ohne durch den Versuch selbst gefährdet zu werden.

Durch das Wiederholen von Versuchsfahrten für einzelne Szenarien, insbesondere mehrfaches Wiederholen für einzelne konkrete Szenarien, wird ausgeschlossen, dass einzelne beobachtete Testergebnisse mehr dem Zufall als der tatsächlichen Robustheit entsprechen. Dadurch, dass ein Szenario selten vorkommt, kann das System häufiger fehlschlagen als wie wenn ein Szenario häufig vorkommt, um die gleiche übergeordnete Versagensrate zu erreichen. Aus der Anzahl von negativen Testergebnissen und der Anzahl der Gesamtwiederholungen lässt sich auf Basis eines Bernoulli-Experiments eine Konfidenz für die geforderte Fehlerrate berechnen. Nach einem Aspekt der Erfindung wird die Häufigkeit miteinbezogen, mit der ein konkretes Szenario in der Realität auftritt, das heißt die sogenannte Exposure. Die Größe der Fehlerrate bezieht sich demnach auf eine Verbundwahrscheinlichkeit, dass einerseits ein konkretes Szenario überhaupt eintritt und dann auch noch gleichzeitig das System einen Fehler macht. Bei einer Exposure in der Größenordnung von $10^{-3}$ h sollte die Systemfehlerrate für einen Sensorkanal in dem entsprechenden konkreten Szenario nicht größer als 1/10 sein. Unter der Annahme, dass das Eintreten des Szenarios von der Versagensrate des Systems in dem Szenario statistisch unabhängig ist, das Szenario nur alle 1000h vorkommt und die geforderte Rate $10^{-4}$ ist, braucht das System nur eine Fehlerrate kleiner oder gleich 1/10. Für ein konkretes Szenario ergibt sich dann bei einer geforderten Konfidenz von 80% (90%, 95%, 99%) eine Anzahl von 15 (21, 28, 43) Wiederholungen. Um die geforderte Konfidenz zu erreichen, darf keine einzige Testwiederholung fehlschlagen.

Zum Nachweis der Robustheit gegen Falsch-Positiv-Erkennungen, insbesondere gegen Geistererkennungen, kann ein streckenabhängiger zweiter Dauerlauf durchgeführt werden. Es ist zu erwarten, dass der Umfang dieses Dauerlaufs in Abhängigkeit der gewählten Entscheidungslogik und einem möglicherweise weniger strengen Akzeptanzkriteriums bezüglich der Falsch-Positiv-Erkennungen deutlich geringer ist als beim ersten Dauerlauf.

In dem ersten Dauerlauf wird die Robustheit des AD-Systems gegen gravierende Ablagefehler nachgewiesen. Das sind solche Falsch-Positiv- und Falsch-Negativ-Erkennungen, bei denen die gemessene Position des von dem Sensor detektierten Objekts von der Position des real existierenden Objekts abweicht. In dem zweiten Dauerlauf wird die Robustheit des AD-Systems gegen Geistererkennungen nachgewiesen. Geistererkennungen treten zumeist nicht im Zusammenhang mit real existierenden dynamischen Objekten auf. Daher ist die statische Umgebung für diese Fehlerkategorie entscheidend, das heißt insbesondere der konkrete Streckenverlauf. Nach einem weiteren Aspekt der Erfindung werden bei der Applizierung des AD-Systems auf eine bestimmte Strecke kontinuierlich aufgezeichnete Daten mit jeder Software-/Systemänderung reprozessiert. Damit wird die Robustheit gegen ortsbezogene, sicherheitskritische Geistererkennungen nachgewiesen.

Der erste und/oder zweite Dauerlauf können bei unterschiedlichen Licht-, Witterungs- und/oder Vegetationsbedingungen durchgeführt werden. Da unterschiedliche Licht- und Witterungsbedingungen und der saisonal unterschiedliche Zustand der Vegetation ausschlaggebend für Falscherkennungen, insbesondere Geistererkennungen sein können, wird durch deren Berücksichtigung die Robustheit gegen entsprechende Fehlwirkungen verbessert.

Ein Umfang des ersten Dauerlaufs kann mittels einer Konfidenz zur Bestätigung einer Fehlerrate für eine vorgegebene maximale Fehlerrate bestimmt werden mittels der bedingten Wahrscheinlichkeit $P[\lambda < FR] \binom{n}{k}$, wobei P als Konfidenz eine Wahrscheinlichkeit angibt, dass die zu bestätigende Fehlerrate $\lambda$ kleiner ist als die vorgegebene maximale Fehlerrate FR unter der Voraussetzung, dass k Fehlerkennungen aus n Versuchen beobachtet wurden.

Die Herleitung für den erforderlichen Umfang des ersten Dauerlaufs basiert auf einem Bernoulli-Versuch, bei dem in diskreten Beobachtungsschritten eine Stichprobe entnommen und das Ergebnis, das heißt Falsch-/Fehlererkennung: ja oder nein, ausgewertet wird mittels k aus n. Die Wahrscheinlichkeit für den Bernoulli-Versuch folgt der Binomialverteilung, die für kleine Fehlerraten durch die Poissonverteilung approximiert werden kann. Durch die erfindungsgemäße Architektur für den zweiten Pfad und die Dekomposition der für das AD-System geforderten Robustheit auf die einzelnen Sensorkanäle wird der erste Dauerlauf auch in statistisch signifikantem Umfang realistisch. Der Versuchsumfang n wird beispielsweise in n Stunden oder als n Kilometer ausgedrückt. Über das Bayes-Theorem ist der erforderliche Versuchsumfang n für eine vorgegebene maximale Fehlerrate FR, Konfidenz P und einer Fehlerrate k berechenbar. Analog ist die Anzahl an Gesamtwiederholungen von Versuchsfahrten für einzelne Szenarien, insbesondere mehrfaches Wiederholen für einzelne konkrete Szenarien, berechenbar.

Eine Versuchsphase mit Sicherheitsfahrer auf einer Zielstrecke kann durchgeführt werden. Diese Versuchsphase stellt ein Closed-Loop-Verfahren dar und stellt sicher, dass nicht häufig konkrete Szenarien auftreten, die von dem ersten und/oder zweiten Dauerlauf nicht abgedeckt sind. Insbesondere wird in dieser Versuchsphase ein Restrisiko für Fehlwirkungen in unbekannten, nicht sicheren Szenarien minimiert. Ferner treten bestimmte Situationen in einem Open-Loop aufgezeichneten Datenkatalog, vergleiche das Einfahren von Rohdaten und deren Reprozessierung, erst gar nicht auf, weil der Versuchsfahrer im Gegensatz zum AD-System verkehrskritische Szenarien schon in der Entstehung vermeiden wird. Die dadurch entstehende Unsicherheit bezüglich unentdeckter Fehlerszenarien wird durch diese Versuchsphase und die Fahrversuche mit dem schienengestüzten Versuchsträger abgedeckt.

Das Nick-/Wankverhalten kann simuliert werden, beispielsweise zeitlich hochaufgelöst. Damit ist der Einfluss des fahrdynamischen Verhaltens des realen AD-Fahrzeuges untersuchbar, beispielsweise zum Zeitpunkt einer Notbremsung. Beispielsweise erfolgt die Simulation des Nick-/Wankverhaltens mittels des schienengestützten Versuchsträgers.

Die in den Versuchen erlaubte Fehlerzahl kann gleich null gesetzt werden. Das heißt, dass auf dem entsprechenden Versuchsumfang kein einziger Fehler beobachtet werden darf, damit die geforderte Fehlerrate mit der erforderlichen Konfidenz bestätigt werden kann. Es ist ein Ziel, den Nachweis mit möglichst wenig Aufwand zu erbringen. Grundsätzlich können auch mehr Fehler zugelassen werden, aber dann ist eine größere Stichprobe für den Nachweis erforderlich; das heißt mehr Dauerlaufkilometer und damit mehr Kosten.

Für einen 1/3-Entscheider mit einem deterministischen Falsch-Positiv-Filter lautet die Robustheitsanforderung, das heißt die Fehlerrate, je Sensorkanal $8 \times 10^{-4}$ 1/h. Dies erfordert einen Umfang von 5800 km für den ersten Dauerlauf, um eine 99% ige Konfidenz zu erreichen. Wird im Vergleich ein 2/3-Entscheider eingesetzt, ist die Fehlerrate je Sensorkanal $1,05 \times 10^{-5}$ 1/h. Dies erfordert einen Umfang von 439.000 km für den ersten Dauerlauf, um eine 99% ige Konfidenz zu erreichen (funktionale Korrelation im Beispiel vernachlässigt).

Bei der Dekomposition der geforderten Falscherkennungsraten kann eine funktionale Korrelation von auftretenden sporadischen Fehlwirkungen über die Sensorkanäle hinweg rechnerisch berücksichtigt werden. Dabei steigt die von den einzelnen Sensorkanälen geforderte Robustheit mit steigender Korrelation. Damit steigt auch der Umfang für den ersten Dauerlauf mit der funktionalen Korrelation der sporadischen Erkennungsfehler der einzelnen Sensorkanäle.

Je höher die funktionale Korrelation ist, umso geringer die funktionale Redundanz, umso größer ist die für die einzelnen Sensorkanäle geforderte Robustheit und damit auch der Dauerlaufumfang. Aber je kleiner die Korrelation ist, umso mehr Testkilometer sind erforderlich zum Nachweis der Korrelation. Das heißt, es gibt einen minimalen Dauerlaufumfang, um die Korrelation oder die geforderter Fehlerrate statistisch nachzuweisen. Bei dem Beispiel 1/3-Entscheider mit Falsch-Positiv-Filter sind das $2 \times 10^6$ km.

Eine funktionale Korrelation ist beispielsweise, dass bei jedem Sensor die Ablagegenauigkeit in Abhängigkeit der Distanz abnimmt. Funktionale Abhängigkeit besteht beispielsweise auch, wenn in den einzelnen Sensorkanälen zumindest ähnliche Methoden zur Umfeldmodellierung eingesetzt werden. Die Dauerlaufdaten dienen damit dem Nachweis der geforderten Einzelkanalrobustheit und der Bestimmung der funktionalen Korrelation der aktuellen Softwareversion hinsichtlich auftretender sporadischer Erkennungsfehler. Für einen 1/3-Entscheider im zweiten Pfad mit deterministischem Falsch-Positiv-Filter ergibt sicn aus der geforderten Fehlerrate ein minimaler Dauerlaufumfang von $2 \times 10^6$ km bei einem Korrelationskoeffizient von $10^{-3}$.

Die Erfindung wird in den folgenden Figuren beispielhaft erläutert. Es zeigen:

Fig. 1 ein Ausführungsbeispiel einer erfindungsgemäßen Vorrichtung,

Fig. 2 ein Ausführungsbeispiel einer Sicherheitszone und Performanzzone,

Fig. 3 ein Ausführungsbeispiel eines Verfahrens für Falsch-Positiv-Erkennungsfehler und Falsch-Negativ-Erkennungsfehler umfassend einen 2/3-Entscheider,

Fig. 4 Ausführungsbeispiele für qualitative Dauerlaufverteilungen,

Fig. 5 Ausführungsbeispiele von Fehlern und

Fig. 6 ein Ausführungsbeispiel für sporadische Falscherkennungen.

In den Figuren bezeichnen gleiche Bezugszeichen gleiche oder funktionsähnliche Teile. In den jeweiligen Figuren werden übersichtshalber die für das jeweilige Verständnis relevanten Bezugsteile angegeben.

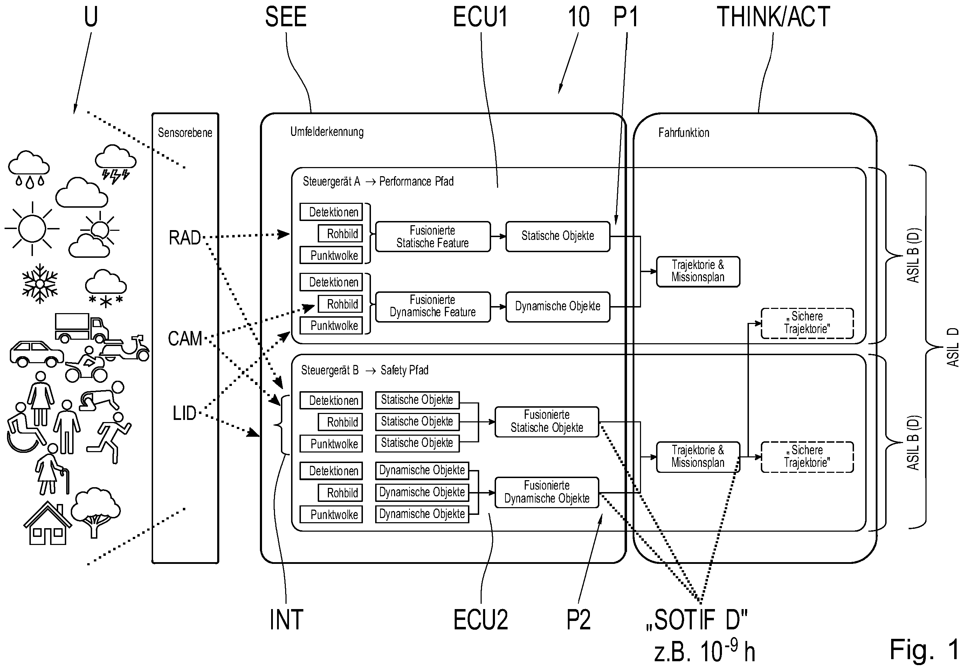

Fig. 1 zeigt eine System-Architektur einer erfindungsgemäßen Vorrichtung 10. Ein Sensorset auf Sensorebene umfasst unterschiedliche Sensortechnologien, nämlich beispielsweise Radartechnologie RAD, Kameratechnologie CAM und Lidartechnologie LID. Die Erfindung ist nicht eingeschränkt auf eine bestimmte Anzahl an Sensortechnologien oder Umfelderfassungssensoren. Ein Ausführungs- oder Anwendungsbeispiel der Erfindung ist ein L4 Fahrsystem umfassend 5 Radarsensoren, 4 Kamerasensoren und 2 Lidarsensoren. Ein automatisiert betreibbares Fahrsystem AD umfasst mindestens einen Umfelderfassungssensor, vorzugsweise mehrere Umfelderfassungssensoren, je Sensortechnologie. Die eingesetzten Sensoren decken jeweils die Sicherheitszone ab. Die Rohdaten der Umfelderfassungssensoren basierend auf Radartechnologie RAD sind Punkt- oder Rohdetektionen. Die Rohdaten der Umfelderfassungssensoren basierend auf Kameratechnologie CAM sind Rohbilder. Die Rohdaten der Umfelderfassungssensoren basierend auf Lidartechnologie LID sind Punktwolken. Umfeldmerkmale U, die von den Umfelderfassungssensoren erkannt werden, umfassen beispielsweise Wetter, Witterung, Verkehrsteilnehmer, Fahrzeugtypen, Gebäude und Landschaftsmerkmale. Umfeldmodelle der Umfelderkennung beschreiben das Umfeld derart, dass die relevanten Umfeldmerkmale U eindeutig für einen Menschen bewertet werden können. Die Rohdaten werden der Vorrichtung 10 über Schnittstellen INT bereitgestellt.

Ein Subsystem Umfelderkennung SEE des Gesamtfahrsystems AD umfasst einen ersten Pfad P1, auch Performance Pfad genannt, und einen zweiten Pfad P2, auch Safety Pfad genannt. Der erste Pfad P1 und der zweite Pfad P2 umfassen jeweils Signalleitungen zu den Umfelderfassungssensoren.

Der erste Pfad P1 ist für ein komfortables Fahrverhalten ausgelegt, wie zum Beispiel langsames Beschleunigen oder Verzögern, beispielsweise von $1.5m/s^2$, oder Anfahren durch vorausschauende Analyse des Umfeldes. Somit werden von den Sensoren deutlich größere Detektionsreichweiten bis an die Leistungsgrenze gefordert. Dies hat naturgemäß eine größere Fehleranfälligkeit zur Folge. Die konkreten Performanceanforderungen an den ersten Pfad werden nach einem Aspekt der Erfindung in Abstimmung mit einem Kunden und/oder in Abhängigkeit der Anforderungen der Fahrfunktion definiert, weil es hauptsächlich um Komfortfragen geht. Naturgemäß sind entsprechende Fehlerraten deutlich größer als die, die von dem zweiten Pfad P2 gefordert werden. Beispielsweise könnten entsprechende Anforderungen aus vergleichbaren ADAS Funktionen abgeleitet werden.

Der erste Pfad P1 umfasst ein erstes Steuergerät ECU1. Das erste Steuergerät ECU1 ist ein elektronisches Steuergerät, auch Electronic Control Unit genannt. Das erste Steuergerät ECU1 umfasst Hardware, beispielsweise einen Mikrocontroller, und Software. Die Software, wenn ausgeführt auf dem ersten Steuergerät ECU1, veranlasst den Mikrokontroller, Signale der Umfelderfassungssensoren auszuwerten, erste Regelungs- und/oder Steuerungssignale für eine Trajektorienplanung THINK zu bestimmen und eine entsprechende Fahraktion ACT auszuführen. Die Auswertung umfasst Fusion von erkannten statischen und/oder dynamischen Umfeldmerkmalen U und Bestimmen von statischen und/oder dynamischen Objekten. Basierend auf den statischen und/oder dynamischen Objekten berechnet ein Subsystem Trajektorienplanung THINK des Gesamtfahrsystems AD eine Trajektorie. Diese Trajektorie wird durch ein Subsystem ACT des Gesamtfahrsystems AD ausgeführt. Umfelderkennung SEE und Trajektorienplanung THINK bestimmt das erste Steuergerät ECU1. Die Fahraktion ACT führen Aktuatoren des Fahrsystems AD für Antrieb, Fahrwerk und/oder Längs- und/oder Quersteuerung aus, die über entsprechende Schnittstellen Signal übertragend mit dem ersten Steuergerät ECU1 verbunden sind.

Der zweite Pfad P2 ist die Rückfallebene des ersten Pfades P1 mit dem Zweck, Risiken für Leib und Leben von Insassen und anderen Verkehrsteilnehmern quantitativ kalkulierbar zu minimieren. In der sogenannten Sicherheitszone S rund um das Fahrsystem AD geht es somit um die Vermeidung eines Unfalls unter Ausschöpfung voller Verzögerungs- und Ausweichpotentiale des Fahrsystems AD, beispielsweise eine Beschleunigung oder Verzögerung von $8m/s^2$. In dieser Sicherheitszone S muss das Fahrsystem AD die maximale Zuverlässigkeit gewährleisten. Somit definiert der Nachweis der geforderten Robustheit in diesem Bereich maßgeblich den erforderlichen Absicherungsaufwand.

Der zweite Pfad P2 umfasst ein zweites Steuergerät ECU2. Das zweite Steuergerät ECU2 ist ein elektronisches Steuergerät, auch Electronic Control Unit genannt. Das zweite Steuergerät ECU2 umfasst Hardware, beispielsweise einen Mikrocontroller, und Software. Die Software, wenn ausgeführt auf dem zweiten Steuergerät ECU2, veranlasst den Mikrokontroller, Signale der Umfelderfassungssensoren auszuwerten, zweite Regelungs- und/oder Steuerungssignale für die Trajektorienplanung THINK zu bestimmen und eine entsprechende Fahraktion ACT auszuführen. Umfelderkennung SEE, Trajektorienplanung THINK und Fahraktion ACT werden damit in dem ersten Pfad P1 und dem zweiten Pfad P2 prozessiert. Die Auswertung umfasst Erkennung von statischen und/oder dynamischen Objekten in den einzelnen Rohdaten der Umfelderfassungssensoren in Abhängigkeit von Sensorkanal spezifischen Umfeldmodellen.

Hierbei ist die Hardware- und/oder Software-Ausgestaltung des ersten Pfades P1, insbesondere des ersten Steuergeräts ECU1, beliebig. Der erfindungsgemäße Safety-Pfad P2 läuft auf dem zweiten Steuergerät ECU2. Die funktionale Redundanz wird auf dem zweiten Steuergerät ECU2 durch unabhängige Software-/Sensorkanäle erreicht. Auf dem zweiten Steuergerät ECU2 wird die sichere Trajektorie berechnet, das heißt Regelungs- und/oder Steuersignale, und z.B. eine Notbremsung ausgelöst, wenn sich in der Sicherheitszone S ein Objekt befindet. Der erste Pfad P1 spielt dabei keine Rolle. So lange der erste Pfad P1 keinen Fehler macht, taucht kein Hindernis in der Sicherheitszone S auf; wenn aber doch, dann übernimmt der zweite Pfad P2.

Erfindungsgemäß stellt die Vorrichtung 10 den Aktuatoren des Fahrsystems AD die zweiten Regelungs- und/oder Steuerungssignale bereit, wobei der zweite Pfad P2 eigenständig die Sicherheitszone S überwacht. Wenn ein Objekt in der Sicherheitszone S auftaucht, dann löst der Sicherheitspfad P2 beispielsweise eine Bremsung aus.

Fehlermodi der dynamischen Objekte umfassen sporadische Erkennungsfehler und kontinuierliche Ablagefehler. Fehlermodi der statischen Objekte sind Teil der ODD/O-EDER-Beschreibung. Die Erfindung ermöglicht es, ein Akzeptanzkriterium des Fahrsystems AD für diese Fehlermodi, insbesondere hinsichtlich der dynamischen Objekte, ganz besonders die sporadischen Erkennungsfehler, zu validieren.

Dadurch, dass eine auf dem zweiten Pfad P2 gerechnete sichere Trajektorie auf das erste Steuergerät ECU1 kopiert wird, stellt die Vorrichtung 10 auch ein Sicherheitsziel bezüglich E/E-Fehlern sicher. Denn das Kopieren der sicheren Trajektorie führt dazu, dass bezüglich der sicheren Trajektorie eine hardwarebezogene Redundanz erreicht ist. Fällt beispielsweise das zweite Steuergerät ECU2 aufgrund eines Hardwarefehlers aus, nutzt die Vorrichtung 10 die auf dem ersten Steuergerät ECU1 vorhandene sichere Trajektorie, um beispielsweise ein Nothaltemanöver umzusetzen. Damit erreicht die Vorrichtung 10 und damit das Fahrsystem AD in Bezug auf E/E-Fehler eine ASIL-D Bewertung, wenn das erste Steuergerät ECU1 und das zweite Steuergerät ECU2 jeweils eine ASIL-B Bewertung haben.

Ferner zeigt Fig. 1 einen ersten Verarbeitungskanal in dem Safety-Pfad P2 und einen zweiten Verarbeitungskanal in dem Safety-Pfad P2, in denen die Rohdaten jeweils unabhängig voneinander in den einzelnen Sensorkanälen ausgewertet werden. In dem ersten Verarbeitungskanal werden statische Objekte ausgewertet. In dem zweiten Verarbeitungskanal werden dynamische Objekte ausgewertet. Die statischen Objekte der einzelnen Sensorkanäle werden in einer logischen Operation, beispielsweise durch einen regelbasierten Entscheider, in dem ersten Verarbeitungskanal zusammengeführt. Die dynamischen Objekte der einzelnen Sensorkanäle werden in einer logischen Operation, beispielsweise durch einen regelbasierten Entscheider, in dem zweiten Verarbeitungskanal zusammengeführt. In Abhängigkeit der derart fusionierten statischen und dynamischen Objekte rechnet der Safety-Pfad P2 eine sichere Trajektorie.

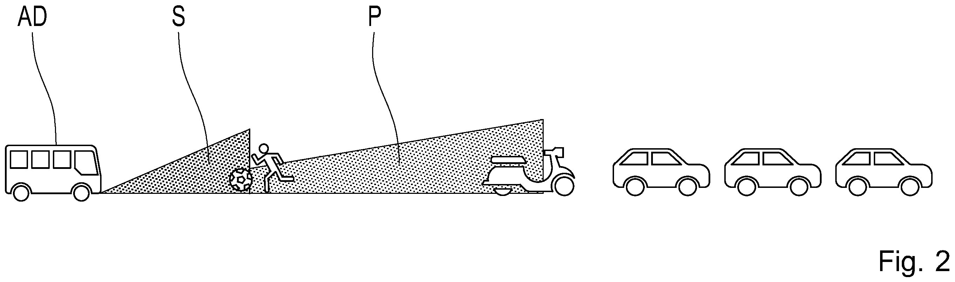

Fig. 2 zeigt eine Sicherheitszone S und eine Performanzzone P, die jeweils Sichtbereichen von Umfelderfassungssensoren entsprechen. Der Sichtbereich, der der Performanzzone P entspricht, wird in dem ersten Pfad P1 ausgewertet. Der Sichtbereich, der der Sicherheitszone S entspricht, wird in dem zweiten Pfad P2 ausgewertet. Das Fahrsystem AD ist beispielsweise ein L4 People Mover.

Die hohen Anforderungen an die Robustheit des Systems beziehen sich auf die Sicherheitszone S, beispielsweise auf eine Notbremszone. Um diese Robustheit nachweisen zu können, schlägt die Erfindung einzelne, unabhängige Sensorkanäle, beobachtbare Schnittstellen und regelbasierte Entscheider vor.

Um weiter schauen zu können als die Sicherheitszone S, werden in der Performanzzone P künstliche Intelligenz und komplizierte Architekturen aus dem Bereich des maschinellen Lernens eingesetzt, deren Verhalten selbst Experten nicht vorhersagen können und vor allem, für die sich die Gesamtfehlerrate nicht dekomponieren lassen. Davon ausgehend setzt die Erfindung für den Komfortbereich diese Methoden ein, für die man schlecht eine hohe Robustheit bestätigen kann, aber mit denen man üblicherweise viel weiter schauen kann. In der Normalsituation beruhen alle Fahrentscheidungen auf dem Umfeldmodell.

Für die Überwachung des Safety-Bereichs setzt die Erfindung bezüglich der Umfelderkennung einfachere Methoden ein, die bezüglich Robustheit eindeutig bewertbar sind, aber eben nicht so weit schauen können. Diese Methoden funktionieren in Bezug auf eine Notsituation als Rückfallebene und sind kalkuliert zuverlässig (quantitative Konfidenz für eine geforderte Robustheit).

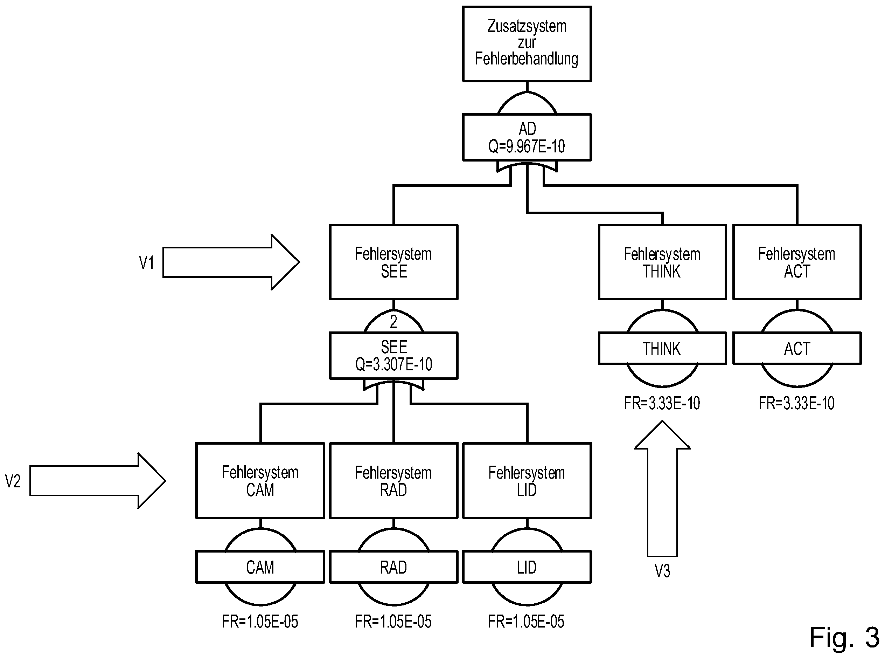

Fig. 3 zeigt einen Fehlerbaum für Falsch-Positiv-Erkennungen FP und Falsch-Negativ-Erkennungen FN mit einem 2/3-Entscheider. Die angegebenen Zahlenwerte für FR sind die jeweiligen Fehlerraten FR. Ein Akzeptanzkriterium für das Gesamtfahrsystem AD wird durch die erfindungsgemäße Dekomposition, insbesondere serielle Dekomposition, auf die Subsystemebenen der Umfelderkennung SEE, Trajektorienplanung THINK und Fahraktion ACT verteilt. Die Dekomposition auf die Subsystemebenen entspricht dem Verfahrensschritt V1 des erfindungsgemäßen Verfahrens. In dem Verfahrensschritt V2 wird die Umfelderkennung SEE in die einzelnen Sensorkanäle CAM, RAD und LID dekomponiert. Die Sensorkanäle entsprechen Erkennungswirkketten. Die Redundanz entsteht aus der unabhängigen Verarbeitung der Rohdaten unterschiedlicher Sensoren mit entsprechend unterschiedlichen Methoden. Damit wird das SOTIF-Absicherungsziel erreicht. Dieser Entscheidungsalgorithmus ist gleich sensitiv auf Falsch-Positiv-Erkennungen FP und Falsch-Negativ-Erkennungen FN. Durch diese Architektur ergeben sich auf der Ebene eines Sensorkanals gleichermaßen Fehlerraten FR von $FR=10^{-5}$ h. Die aus dieser Fehlerrate FR resultierenden Stunden, die zum Nachweis des Ausbleibens katastrophaler Fehler notwendig sind, betragen 284.600 h. Diese Testzeit wird beispielsweise erreicht, wenn 32 Testfahrzeuge über ein Jahr kontinuierlich Versuchsdaten einsammeln.

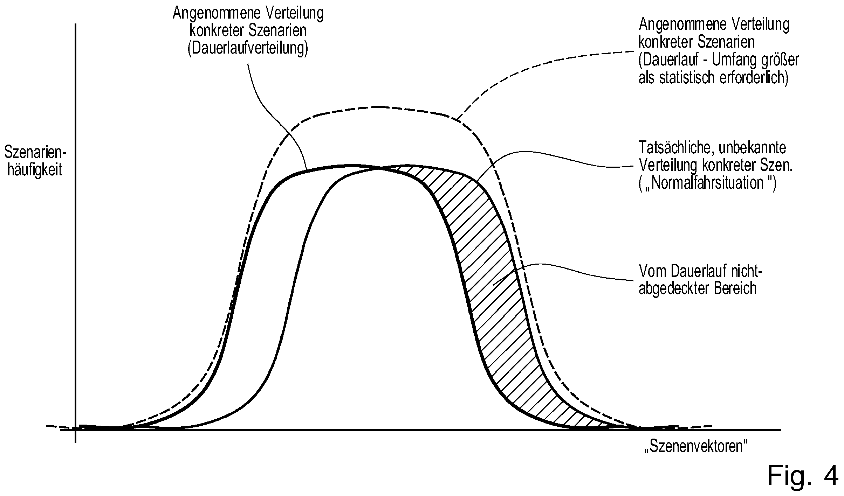

Erfindungsgemäß werden Dauerläufe durchgeführt. Naturgemäß sollte der Dauerlauf so verteilt sein, dass es der Normalfahrsituation des Fahrsystems AD im realen Einsatz entspricht. Fig. 4 zeigt die Problematik der Dauerlaufverteilung. Auf der Abszisse sind alle relevanten Szenenvektorkombinationen aufgetragen, das heißt die Gesamtheit aller theoretisch möglichen konkreten Szenarien einschließlich der relevanten Parameter. Ein einzelnes konkretes Szenario stellt dabei eine eindeutige Kombination aus relevanten Umwelteinflüssen sowie statischer und dynamischer Objektszenerie dar. Auf der Ordinate wird die Häufigkeit aufgetragen, mit der ein bestimmtes konkretes Szenario vorkommt. Die Aufgabe ist es also die tatsächliche Häufigkeitsverteilung der konkreten Szenarien im späteren Regelbetrieb möglichst exakt abzuschätzen und den Dauerlauf entsprechend auszulegen.

Wenn die Verteilung des Dauerlaufs von der des späteren Regelbetriebs jedoch abweicht, deckt der Dauerlauf nicht alle relevanten konkreten Szenarien ab. Dadurch entsteht die Möglichkeit, dass bestimmte Fehldetektionen bei der Reprozessierung der Dauerlaufaufzeichnungen übersehen werden. Das ist insbesondere dann ein Problem, wenn die Häufigkeit der im Dauerlauf nicht enthaltenen konkreten Szenarien im Realbetrieb hoch ist. Eine Möglichkeit dem entgegenzusteuern wäre den statistisch erforderlichen Dauerlaufumfang wieder zu vergrößern. Damit würde man mehr Szenarien zufällig einsammeln und der Bereich der nicht abgedeckten konkreten Szenarien wird automatisch tendenziell kleiner. Die Frage ist aber wie viel mehr Daten erforderlich wären, um den nicht abgedeckten Bereich ausreichend klein zu machen.

Hierzu schlägt die Erfindung eine Phase vor, in der das fertige Fahrsystem AD auf einer Zielstrecke zunächst noch mit einem Sicherheitsfahrer betrieben wird.

Eine weitere Maßnahme ist es, die örtlichen Betriebsbedingungen zu berücksichtigen, beispielsweise eine signifikante Verkehrssimulation oder relevante Verkehrsstatistiken oder Verkehrsbeobachtungen, damit man alle relevanten Fahrzeugkonstellationen kennt und die in einem Dauerlauf gesehenen Szenarien damit vergleicht.

Gleiches gilt für Wetterbedingungen oder Wetterstatistiken. Der Inhalt des Dauerlaufs lässt sich im Grunde mit sehr ähnlichen Methoden definieren, wie die Begründung der Vollständigkeit der Szenen für die Absicherung der Fahrfunktion Think: Alles, was beobachtet wird, kann definiert werden. Die Betriebsbedingungen sind beobachtbar und damit definierbar.

Daraus lässt sich die Verteilung der Betriebsbedingungen vollständig beschreiben. Die Betriebsbedingungen sind dabei aber nur eine Untermenge der Szenenvektorkombinationen, die zu einer sensorischen Fehlwirkung führen können. Aus diesem Grund schlägt die Erfindung eine Reprozessierung der kontinuierlich in einem Dauerlauf aufgezeichneten Daten vor. Dadurch werden alle unbekannten weiteren Parameter umfassend die Triggerbedingungen in statistischem Umfang mit eingesammelt, ohne sie zu kennen. Aber um den Dauerlaufinhalt zu beschreiben reichen die Betriebsbedingungen aus.

Was dann noch an Unsicherheit übrig bleibt, verbunden mit dem Aspekt, dass ein Versuchsfahrer (Dauerlauf = open loop) kritische Situationen in der Entstehung vermeiden wird, deckt die Erfindung über die Closed-Loop-Phase mit Sicherheitsfahrer ab.

Sofern es zu keinen Fehlwirkungen kommt, die man nicht auch aus dem Dauerlauf kennt, kann dieser als hinreichend repräsentativ für die Realbetriebsstrecke angesehen werden und das Fahrsystem AD im Weiteren auch ohne Sicherheitsfahrer betrieben werden. Ein wichtiger Aspekt zur Minimierung des vom Dauerlauf nicht abgedeckten Bereichs ist, dass alle relevanten Konstellationen mit dynamischen Objekten in entsprechendem Umfang und in allen Umweltsituationen, insbesondere Wetter-/Lichtbedingungen, während der Dauerlaufaufzeichnung beobachtet wurden. Welche Objektkonstellationen dabei relevant sind, kann aus nanoskopischen Verkehrssimulationen und/oder aus repräsentativen Verkehrsbeobachtungen für identifizierte ODD-Streckenabschnitte gewonnen werden.

Der Dauerlauf wird erfindungsgemäß nicht auf einem bestimmten freizugebenden Streckenabschnitt durchgeführt. Auch wenn beispielsweise auf dem freizugebenden Streckenabschnitt üblicherweise wenig Verkehr ist, wird der Dauerlauf erfindungsgemäß derart gewählt, dass eben auch hohe Verkehrsdichten auf den relevanten ODD-Streckenabschnitten berücksichtigt sind. Einerseits möchte man schließlich den Betrieb des AD-Systems nicht einstellen, wenn die Verkehrsdichte mal zunimmt, andererseits möchte man das System ja gegebenenfalls auch in vergleichbaren ODDs mit dichterem Verkehr einsetzen, ohne von vorne anfangen zu müssen.

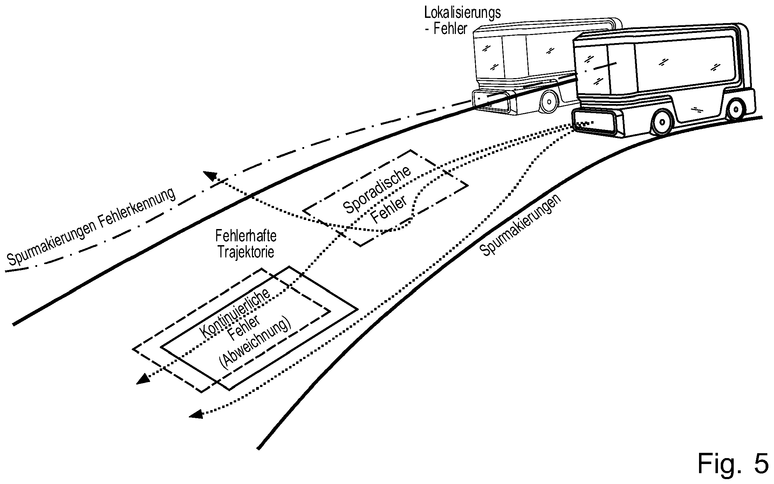

Fig. 5 zeigt potentielle Fehler des Fahrsystems AD umfassend Fehler auf Sensorebene und Umfelderkennung und Fehler in der Fahrfunktion. Potentielle Fehler, die von der Erfindung berücksichtigt werden, sind beispielsweise:

- Lateraler Lokalisierungsfehler: Aufgrund einer fehlerhaften lateralen Lokalisierung kann es zu einem Überfahren der Spurbegrenzung kommen. Kollisionen mit seitlich positionierten oder gar entgegenkommenden Verkehrsteilnehmern sowie statischen Objekten können somit nicht ausgeschlossen werden. Abhilfe schafft hier ein System zur sicheren Verortung in der eigenen Spur Die Absicherung eines solchen Systems kann unter anderem durch eine zusätzliche Infrastrukturüberwachung realisiert werden.

- Longitudinaler Lokalisierungsfehler: Aber auch longitudinale Lokalisierungsfehler können sich kritisch auswirken. Dies ist vor allem dann der Fall, wenn zum Beispiel eine laterale Spurmarkierung an einer bestimmten Stelle nicht überfahren werden darf, wie etwa Ausfahrt oder Bushaltestelle. Ist die Verortung in longitudinale Richtung fehlerhaft, kann es zu einem kritischen Verlassen der Spur kommen. Mit zusätzlichen Landmarken, beispielsweise Linien oder QR Codes, kann eine sichere Verortung ermöglicht werden.

- Objekterkennung - Genauigkeit: Messfehler in der Objekterkennung können zu abweichenden Objekteigenschaften führen. Diese können potenziell gefährlich werden, wenn Objekte zum Beispiel in die falsche Spur verortet werden, oder Trajektorien zu nah oder durch Teile eines realen Objekts geplant werden.

- Objekterkennung - Existenz: Bei der Existenzbestimmung von Objekten kann es zum Auftreten von sporadischen Fehlern kommen. Diese können kritisch sein, da andere Verkehrsteilnehmer entweder nicht erkannt oder der falschen Spur zugeordnet werden. Auch Detektionen, zu denen kein reales Objekt existiert, oder Erkennungen mit gravierend diskontinuierlich fehlerhaften Objekteigenschaften sind stark risikobehaftet. Im Kontext von SAE Level 4 Fahrzeugen wird der Falsch-Negativ-Erkennungsfehler als der kritischste angenommen, da Kollisionen mit real existierenden Verkehrsteilnehmern deutlich häufiger fatal enden als Falschbremsungen.

- Fahrfunktion: Unabhängig von der korrekten Umfelderkennung können auch bei der Bildung von Trajektorien in der Fahrfunktion Fehler auftreten. Dies ist dann der Fall, wenn eine Trajektorie errechnet wird, die in Bezug auf die Fahraktion und die Sicherheit unzureichend ist. Solche Fehler führen zu falschen lateralen Bewegungen, sowie falschen Beschleunigungen oder Verzögerungen.

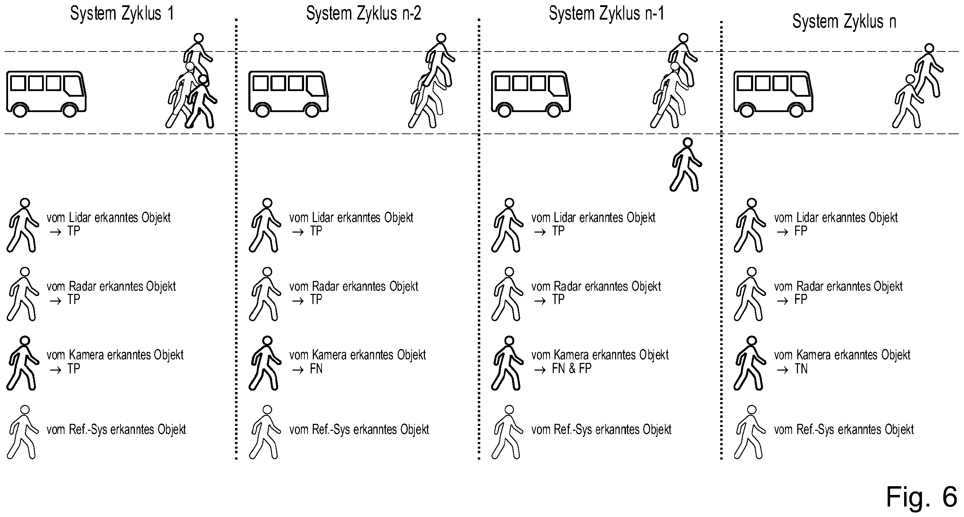

Fig. 6 zeigt, wie sporadische Falscherkennungen erkannt werden. Mittels Referenzsensoren eines Referenzsystems werden statistische Fehlverteilungen für Einzelsensoren bezüglich Wahr-Positiv-Erkennung TP, Wahr-Negativ-Erkennungen TN, Falsch-Positiv-Erkennungen TP und Falsch-Negativ-Erkennungen FN erzeugt. In den aufzeichnenden Dauerlauffahrzeugen werden zu dem testenden Sensorset weitere Vergleichssensoren als Referenzsensoren mitgeführt. Um das zu testende Umfeldmodell zu testen, wird aus den Rohdaten der Referenzsensoren ein Referenzumfeldmodell bestimmt. Da die Rohdatenverarbeitung bei dem Referenzsystem nicht in Echtzeit erfolgen muss, kann das Referenzumfeldmodell vorteilhafterweise in einem Post-Processing bestimmt werden. Ein automatischer Abgleich der zu testenden Umfeldmodelle mit dem Referenzumfeldmodell reduziert den Aufwand zum Bestimmen von zuverlässigen Informationen über die in der betrachteten Szene tatsächlich existierenden Objekte an ihren jeweiligen Positionen. Anstatt alle relevanten Objekte in einem aufgenommenen Videostream manuell zu annotieren, werden entsprechende Annotationen nur bei einer Diskrepanz zwischen zu testendem Umfeldmodell und Referenzmodell gemacht. Die Charakteristik der Referenzsensorik wird genutzt, um Schwellwerte zwischen Ablagefehler und sporadischen Fehlern zu definieren. Die Events, die über dem Schwellwert der Referenzwertungsgenauigkeit bezüglich sporadischem Fehler liegen, werden manuell annotiert.

Bezugszeichen

10 Vorrichtung
AD automatisiert betreibbares Fahrsystem
SEE Umfelderkennung
THINK Trajektorienplanung
ACT Fahraktion
P1 erster Pfad
ECU1 erstes Steuergerät
P2 zweiter Pfad
ECU2 zweites Steuergerät
E1 erste Verarbeitung
HF zweite Verarbeitung
S Sicherheitszone
P Performanzzone
INT Schnittstelle
RAD Umfelderfassungssensoren basierend auf Radartechnologie
CAM Umfelderfassungssensoren basierend auf Kameratechnologie
LID Umfelderfassungssensoren basierend auf Lidartechnologie
FR Fehlerrate
SF nicht-kontinuierliche Erkennungsfehler
FP Falsch-Positiv-Erkennung
FN Falsch-Negativ-Erkennung
TP Wahr-Positiv-Erkennung
TN Wahr-Negativ-Erkennung
U Umfeldmerkmale
V1-V3 Verfahrensschritte

**Patentansprüche**

1. Vorrichtung (10) zur Umfelderkennung (SEE) eines automatisiert betreibbaren Fahrsystems (AD), umfassend einen ersten Signalverarbeitungspfad (P1) umfassend ein erstes Steuergerät (ECU1), das ausgeführt ist, in Abhängigkeit von Rohdaten von Umfelderfassungssensoren (RAD, CAM, LID) aus einem Performanzbereich (P) des Fahrsystems (AD) erste Regelungs- und/oder Steuerungssignale zur Trajektorienplanung (THINK) des Fahrsystems (AD) zu bestimmen, wobei in dem Performanzbereich (P) langsames Beschleunigen oder Verzögern oder Anfahren durch vorausschauende Analyse des Umfeldes geregelt wird durch geforderte größere Detektionsreichweite der Umfelderfassungssensoren (RAD, CAM, LID), einen zweiten Signalverarbeitungspfad (P2) umfassend ein zweites Steuergerät (ECU2), das zu jedem der Umfelderfassungssensoren (RAD, CAM, LID) einen Verarbeitungskanal umfasst und das ausgeführt ist, in Abhängigkeit der Rohdaten aus einem Sicherheitsbereich (S) des Fahrsystems (AD) zweite Regelungs- und/oder Steuerungssignale zur Trajektorienplanung (THINK) des Fahrsystems (AD) zu bestimmen, wobei

• das zweite Steuergerät (ECU2) ausgeführt ist, in den einzelnen Verarbeitungskanälen statische und/oder dynamische Objekte in den einzelnen Rohdaten der Umfelderfassungssensoren (RAD, CAM, LID) in Abhängigkeit von Verarbeitungskanal-spezifischen Umfeldmodellen zu erkennen, wobei in einem Umfeldmodell die jeweiligen Rohdaten unabhängig von anderen Rohdaten verarbeitet werden, wobei der zweite Signalverarbeitungspfad (P2) Programmbefehle umfasst, die bewirken, dass das zweite Steuergerät (ECU2) die erkannten Objekte in einer ODER-Entscheidung, Mehrheitsentscheidung oder N-aus-X-Entscheidung, wobei X die Anzahl der Umfelderfassungssensoren (RAD, CAM, LID) und N eine vorgegebene Zahl mit N ≤ X ist, zusammenführt, wenn das Programm auf dem zweiten Steuergerät (ECU2) läuft, und in Abhängigkeit der Zusammenführung Regelungs- und/oder Steuerungssignale für eine Trajektorienplanung (THINK) des Fahrsystems (AD) zu bestimmen, um einer bestimmten Trajektorie zu folgen, und

• der Sicherheitsbereich (S) der sichere Erfassungsbereich unmittelbar um ein Fahrzeug ist und der kleiner als der Performanzbereich (P) ist, wobei der zweite Signalverarbeitungspfad (P2) weiter umfasst:

• Signalleitungen und Signalauswertung zur Umfelderkennung (SEE),

• erste Schnittstellen (INT) zu Umfelderfassungssensoren (RAD, CAM, LID), um Rohdaten aus dem Sicherheitsbereich (S) des Fahrsystems (AD) zu erhalten, wobei

das zweite Steuergerät (ECU2) die Regelungs- und/oder Steuerungssignale in eine relativ zu dem zweiten Signalverarbeitungspfad (P2) externe Verarbeitungseinheit kopiert und die Vorrichtung (10) ausgeführt ist, Aktuatoren des Fahrsystems (AD) die zweiten Regelungs- und/oder Steuerungssignale bereitzustellen, falls in dem zweiten Signalverarbeitungspfad (P2) zumindest ein Objekt erkannt wurde, und die zweiten Regelungs- und/oder Steuerungssignale auf dem ersten Steuergerät (ECU1) kopiert sind.

## Claims

1. Device (10) for environment recognition (SEE) of a driving system (AD) that is able to be operated in an automated manner, comprising

a first signal processing path (P1) comprising a first control unit (ECU1) designed to determine first closed-loop and/or open-loop control signals for trajectory planning (THINK) of the driving system (AD) on the basis of raw data from environment detection sensors (RAD, CAM, LID) from a performance range (P) of the driving system (AD), wherein in the performance range (P) slow acceleration or deceleration or start-up is subject to closed-loop control by predictive analysis of the environment as a result of a required greater detection range of the environment detection sensors (RAD, CAM, LID), a second signal processing path (P2) comprising a second control unit (ECU2) comprising one processing channel for each of the environment detection sensors (RAD, CAM, LID) and designed to determine second closed-loop and/or open-loop control signals for trajectory planning (THINK) of the driving system (AD) on the basis of raw data from a safety range (S) of the driving system (AD), wherein

• the second control unit (ECU2) is designed to identify in the individual processing channels static and/or dynamic objects in the individual raw data of the environment detection sensors (RAD, CAM, LID) on the basis of processing-channel-specific environment models, wherein the respective raw data are processed in an environment model independently of other raw data, wherein the second signal processing path (P2) comprises program commands that cause the second control unit (ECU2) to combine the identified objects in an OR decision, a majority decision or an N-out-of-X decision, wherein X is the number of environment detection sensors (RAD, CAM, LID) and N is a predetermined number where N ≤ X, when the program is run on the second control unit (ECU2), and to determine closed-loop and/or open-loop control signals for trajectory planning (THINK) of the driving system (AD) on the basis of the combination in order to follow a particular trajectory, and

• the safety range (S) is the safe detection range which is situated immediately around a vehicle and which is smaller than the performance range (P), wherein the second signal processing path (P2) further comprises:

• signal lines and signal evaluation for environment recognition (SEE),

• first interfaces (INT) to environment detection sensors (RAD, CAM, LID) in order to obtain raw data from the safety range (S) of the driving system (AD), wherein the second control unit (ECU2) copies the closed-loop and/or open-loop control signals to a processing unit which is situated external to the second signal processing path (P2) and the device (10) is designed to provide the second closed-loop and/or open-loop control signals to actuators of the driving system (AD) if at least one object has been identified in the second signal processing path (P2) and the second closed-loop and/or open-loop control signals are copied to the first control unit (ECU1).

**Revendications**

1. Dispositif (10) de reconnaissance de l'environnement (SEE) d'un système de conduite (AD) à fonctionnement automatisé, comprenant

un premier trajet de traitement de signal (P1) comprenant un premier appareil de commande (ECU1) qui est réalisé pour déterminer, en fonction de données brutes provenant de capteurs de détection d'environnement (RAD, CAM, LID) à partir d'une première zone de performance (P) du système de conduite (AD), des premiers signaux de régulation et/ou de commande pour la planification de trajectoire (THINK) du système de conduite (AD), dans lequel dans la zone de performance (P), une accélération ou une décélération ou un démarrage lent(e) est régulé(e) par une analyse prédictive de l'environnement par une portée de détection supérieure exigée des capteurs de détection d'environnement (RAD, CAM, LID), un deuxième trajet de traitement de signal (P2) comprenant un deuxième appareil de commande (ECU2) qui comprend pour chacun des capteurs de détection d'environnement (RAD, CAM, LID) un canal de traitement et qui est réalisé pour déterminer des deuxièmes signaux de régulation et/ou de commande en fonction des données brutes provenant d'une zone de sécurité (S) du système de conduite (AD) pour la planification de trajectoire (THINK) du système de conduite (AD), dans lequel

• le deuxième appareil de commande (ECU2) est réalisé pour reconnaître dans les canaux de traitement individuels des objets statiques et/ou dynamiques dans les données brutes individuelles des capteurs de détection d'environnement (RAD, CAM, LID) en fonction de modèles d'environnement spécifiques au canal de traitement, dans lequel dans un modèle d'environnement, les données brutes respectives sont traitées indépendamment d'autres données brutes, dans lequel le deuxième trajet de traitement de signal (P2) comprend des instructions de programme qui font que le deuxième appareil de commande (ECU2) regroupe les objets reconnus dans une décision OU, une décision majoritaire ou une décision N sur X, où X est le nombre des capteurs de détection d'environnement (RAD, CAM, LID), et N est un nombre prédéfini où N ≤ X, si le programme est exécuté sur le deuxième appareil de commande (ECU2), et

pour déterminer en fonction du regroupement des signaux de régulation et/ou de commande pour une planification de trajectoire (THINK) du système de conduite (AD) afin de suivre une trajectoire déterminée, et

• la zone de sécurité (S) de la zone de détection sûre se trouve directement autour d'un véhicule, et est plus petite que la zone de performance (P), dans lequel le deuxième trajet de traitement de signal (P2) comprend en outre :
• des lignes de signal et une évaluation de signal pour la reconnaissance de l'environnement (SEE),
• des premières interfaces (INT) avec les capteurs de détection d'environnement (RAD, CAM, LID) pour obtenir des données brutes à partir de la zone de sécurité (S) du système de conduite (AD),

dans lequel le deuxième appareil de commande (ECU2) copie les signaux de régulation et/ou de commande dans une unité de traitement externe par rapport au deuxième trajet de traitement de signal (P2), et le dispositif (10) est réalisé pour fournir aux actionneurs du système de conduite (AD) les deuxièmes signaux de régulation et/ou de commande si au moins un objet a été reconnu sur le deuxième trajet de traitement de signal (P2), et les deuxièmes signaux de régulation et/ou de commande sont copiés sur le premier appareil de commande (ECU1).

Fig. 1

EP 3 945 338 B1

Fig. 2

Zusatzsystem zur Fehlerbehandlung

AD
Q=9.967E-10

Fehlersystem ACT

ACT

FR=3.33E-10

Fehlersystem THINK

THINK

FR=3.33E-10

V3

Fehlersystem SEE

SEE
Q=3.307E-10

2

V1

Fehlersystem LID

LID

FR=1.05E-05

Fehlersystem RAD

RAD

FR=1.05E-05

Fehlersystem CAM

CAM

FR=1.05E-05

V2

Fig. 3

Angenommene Verteilung
konkreter Szenarien
(Dauerlaufverteilung)

Angenommene Verteilung
konkreter Szenarien
(Dauerlauf - Umfang größer
als statistisch erforderlich)

Szenarienhäufigkeit

Tatsächliche, unbekannte
Verteilung konkreter Szen.
(„Normalfahrsituation ")

Vom Dauerlauf nicht-
abgedeckter Bereich

„Szenenvektoren"

Fig. 4

EP 3 945 338 B1

Fig. 5

System Zyklus 1

System Zyklus n-2

System Zyklus n-1

System Zyklus n

vom Lidar erkanntes Objekt
→ TP

vom Radar erkanntes Objekt
→ TP

vom Kamera erkanntes Objekt
→ TP

vom Ref.-Sys erkanntes Objekt

vom Lidar erkanntes Objekt
→ TP

vom Radar erkanntes Objekt
→ TP

vom Kamera erkanntes Objekt
→ FN

vom Ref.-Sys erkanntes Objekt

vom Lidar erkanntes Objekt
→ TP

vom Radar erkanntes Objekt
→ TP

vom Kamera erkanntes Objekt
→ FN & FP

vom Ref.-Sys erkanntes Objekt

vom Lidar erkanntes Objekt
→ FP

vom Radar erkanntes Objekt
→ FP

vom Kamera erkanntes Objekt
→ TN

vom Ref.-Sys erkanntes Objekt

Fig. 6

EP 3 945 338 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190113916 A1
- US 2020218913 A1
- US 2018267550 A1
- US 2016368491 A1